# EUROPÄISCHE PATENTSCHRIFT

(11) **EP 2 100 044 B1**
(45) Veröffentlichungstag und Bekanntmachung des Hinweises auf die Patenterteilung: **25.03.2015**
(21) Anmeldenummer: 07817703.7
(22) Anmeldetag: 19.10.2007
(51) Int. Cl.: F16B 13/00, F16B 13/08, F16B 13/12, F16B 13/14

(54) **DÜBEL FÜR DECKPLATTENHINTER- UND -EINGRIFF**
ANCHOR FOR ENGAGING BEHIND AND WITH COVER PANELS
CHEVILLE POUR INSERTION ARRIÈRE EN INTERCONNEXION AVEC DES PLAQUES DE RECOUVREMENT

(30) Priorität: 19.10.2006 DE 102006049954
(43) Veröffentlichungstag der Anmeldung: 16.09.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/001868
(87) Internationale Veröffentlichungsnummer: WO 2008/046413

(56) Entgegenhaltungen:
- EP-A- 1 116 831
- EP-A- 1 277 971
- DE-U1- 20 002 016

## Beschreibung

Die Erfindung betrifft einen Dübel zur Befestigung an - in Stützkernbauweise gefertigten - flächigen Bauteilen mit einer ersten und einer zweiten Deckplatte und mindestens einer Stützkernzwischenlage, wobei der Dübel mindestens einen Spreizkörper und mindestens einen Keilkörper umfasst, wobei der in den Spreizkörper zumindest bereichsweise eingesteckte Keilkörper eine Ausnehmung zum Einschrauben oder Einschlagen eines Befestigungsmittels hat.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. Polyurethan-Schaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ein anderer Dübel, der diesen Nachteil vermeidet, ist aus dem Internetkatalog (September 2006) des Unternehmens Fischer Befestigungssysteme GmbH bekannt. Er wird dort unter der Bezeichnung SLM-N geführt. Der Dübel hat einen rohrförmigen Spreizkörper, in dessen Bohrung ein zumindest bereichsweise kegelstumpfförmiger Keilkörper am hinteren, geschlitzten Spreizkörperende eingesteckt ist. Der Keilkörper hat eine zentrale Bohrung mit Innengewinde. Wird der Keilkörper zum Beispiel durch das Anziehen einer im Gewinde des Keilkörpers sitzenden Halteschraube in den Spreizkörper hineinbewegt, spreizt sich dieser unter Festklemmen im unteren Bereich der Bohrung. Allerdings würde dieser Dübel nur in einem sehr formsteifen Kernmaterial fest sitzen.

Aus der EP 1 116 831 A1 ist ein zweiteiliger Dübel für Bohrlöcher mit Hinterschneidung bekannt. In einer unten geschlitzten Dübelhülse steckt ein Keilbolzen. Im Bereich der Schlitze ist die Bohrung der Dübelhülse konisch verengt. Wird der Keilbolzen in die Verengung der Dübelhülse eingetrieben, spreizt sich das hintere Ende der Dübelhülse, um sich in der Bohrlochhinterschneidung zu verklemmen.

Aus der EP 1 277 971 A1 ist ein Dübel für Hohlkammerprofile bekannt, der aus einer Spreizhülse und einem Spreizkonus besteht. Die Spreizhülse wird mit Hilfe einer Schraube, die auch die vom Dübel zu haltende Last trägt, im Hohlkammerprofil befestigt. Die Spreizhülse und der Spreizkonus haben jeweils keine Verrastungszone.

Aus der DE 200 02 016 U1 ist ein Verbunddübel bekannt, der aus einer Außenhülse, einer Innenhülse mit Flansch und einer Klebepatrone besteht. Letztere sitzt in der Innenhülse. Die Hülsen weisen Durchbrüche auf. Durch das Eindrücken einer Schraube reißt die Klebepatrone auf und verklebt die Schraube mit den Hülsen und der Wandung der dübeltragenden Wand.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen.

Das Problem wird mit den Merkmalen der Ansprüche 1, 9, 10 und 12 gelöst. Dazu ist nach Anspruch 1 der Dübel in die Ausnehmung des flächigen Bauteils einsetzbar. Der Spreizkörper hat mindestens zwei spreizbare Hintergriffselemente, mindestens eine Verrastungszone und eine Abstützzone. Der Keilkörper weist mindestens eine Zylinderzone, mindestens eine Keilzone und mindestens eine Verrastungszone auf. Die Zylinderzone ist in der Bohrung der ersten Deckplatte anlegbar. Die Hintergriffselemente des Spreizkörpers sind durch die Keilzone hinter der ersten Deckplatte - an dieser anliegend - aufspreizbar. Die Verrastungszonen sind miteinander verrastet. Die Abstützzone des Spreizkörpers ist in der Sacklochausnehmung der zweiten Deckplatte zumindest radial anlegbar.

Nach Anspruch 9 ist die Abstützzone ein Teil des Keilkörpers.

Gemäß Anspruch 10 ist der Dübel in die Ausnehmung setzbar. Der Spreizkörper hat mindestens zwei spreizbare Hintergriffselemente, mindestens eine Verrastungszone, eine Abstützzone und eine Kammer mit eingelegter - mindestens einen Klebstoff enthaltenden - Klebstoffpatrone und bodenseitiger Austrittsausnehmung. Der Keilkörper weist mindestens eine Zylinderzone, mindestens eine Keilzone, mindestens eine Verrastungszone und ein kolbenartiges Ende auf. Die Zylinderzone ist in der Bohrung der ersten Deckplatte anlegbar. Die Hintergriffselemente des Spreizkörpers sind durch die Keilzone hinter der ersten Deckplatte - an dieser anliegend - aufspreizbar. Die Verrastungszonen sind miteinander verrastet. Die Abstützzone des Spreizkörpers ist in der Sacklochausnehmung der zweiten Deckplatte zumindest radial anlegbar. Der Klebstoff der geöffneten Klebstoffpatrone ist in der Montagefuge zwischen der unteren Deckplatte und dem bodenseitigen Ende des Spreizkörpers verteiltbar.

Im Anspruch 12 wird auf eine Verrastung zwischen dem Spreizkörper und dem Keilkörper verzichtet.

Mit der vorliegenden Erfindung wird ein Dübel für Leichtbauplatten geschaffen, der bei hoher Auszugskraft sowohl manuell als auch maschinell schnell und sicher gesetzt werden kann.

Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines gespreizten Dübels;
- Figur 2:: Ungespreizter Spreizkörper zu Figur 1;
- Figur 3:: Keilkörper zu Figur 1;
- Figur 4:: In Leichtbauplatte eingesteckter Spreizkörper;
- Figur 5:: Montierter Dübel zum Spreizkörper nach Figur 4;
- Figur 6:: Auf unterer Deckplatte aufstehender Spreizkörper;
- Figur 7:: In untere Deckplatte hineinragender Keilkörper;
- Figur 8:: Spreizkörper mit Klebstoffballon;
- Figur 9:: Montierter Dübel zum Spreizkörper nach Figur 8;
- Figur 10:: Wie Figur 1, jedoch mit anderem Längsschlitz und teilweise eingestecktem Keilkörper;
- Figur 11:: Vergrößerung von Detail aus Figur 5;
- Figur 12:: Darstellung der Leichbauplattenbohrung;
- Figur 13:: Dübel mit anderer Einschraubmöglichkeit;
- Figur 14:: Dübel ohne Verrastung;
- Figur 15:: Querschnitt durch einen unverformten Dübel mit Exzenterspreizung;
- Figur 16:: Querschnitt durch einen verformten Dübel mit Exzenterspreizung.

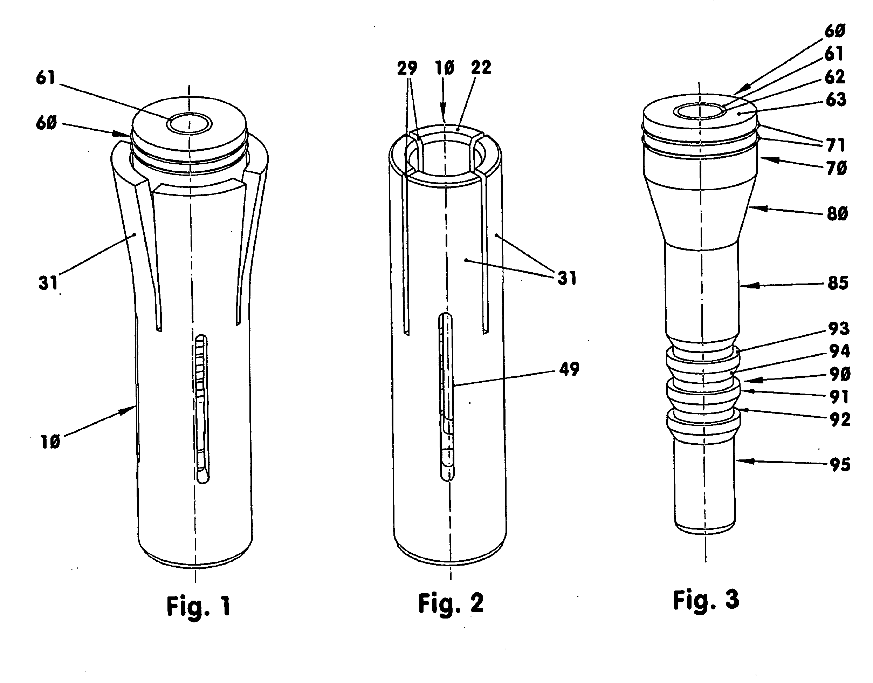

Die Figur 1 zeigt einen gespreizten Dübel in der Gestalt, wie er sie nach dem Einbau in einer Leichtbauplatte hätte. Der Dübel hat hier nur zwei Teile, einen Spreizkörper (10) und einen Keilkörper (60). Beide Teile (10, 60) sind in den Figuren 2 und 3 separat dargestellt. Der Dübel nach Figur 1 hat beispielsweise eine Länge von 37,5 Millimetern. Das zum Setzen des Dübels gebohrte Loch hat z.B. einen Durchmesser von 8,5 Millimetern. Der Durchmesser des unverformten Dübels ist bei dieser Konstruktion entweder maximal um den Faktor drei größer als der Kerndurchmesser der mit dem Dübel in der Leichtbauplatte zu befestigende Schraube oder maximal um den Faktor 2,3 größer als der Nenndurchmesser der in den Dübel eingeschraubten Schraube.

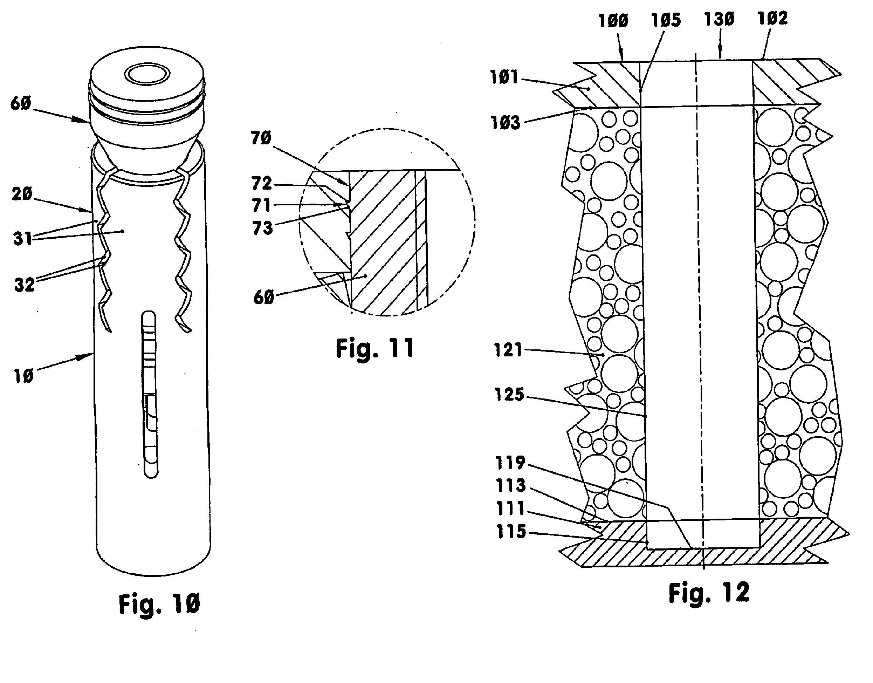

Der Dübel dient z.B. der Beschlagsbefestigung in Leichtbauplatten (100) ohne Riegel und festen Einlagen, vgl. Figur 12. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat eine Wandstärke von 37,5 Millimetern. Jede Deckplatte ist hier vier Millimeter dick. Statt des Schaumkerns kann sie u.a. auch einen Wabenkern haben. In der Leichtbauplatte befindet sich eine Bohrung (130), die sich aus den Abschnitten (105), (125) und (115) zusammensetzt. Letzterer Abschnitt (115) ist eine Sacklochbohrung. Ihre Tiefe beträgt hier 75% der Materialstärke der unteren Deckplatte (111). Ggf. kann anstelle der Sacklochbohrung (115) eine Durchgangsbohrung verwendet werden.

Die Leichtbauplatte (100) kann auch gewölbt, z.B. zylindrisch oder sphärisch, ausgeführt sein, sofern die Materialstärke des Stützkerns (121) zumindest annähernd konstant ist.

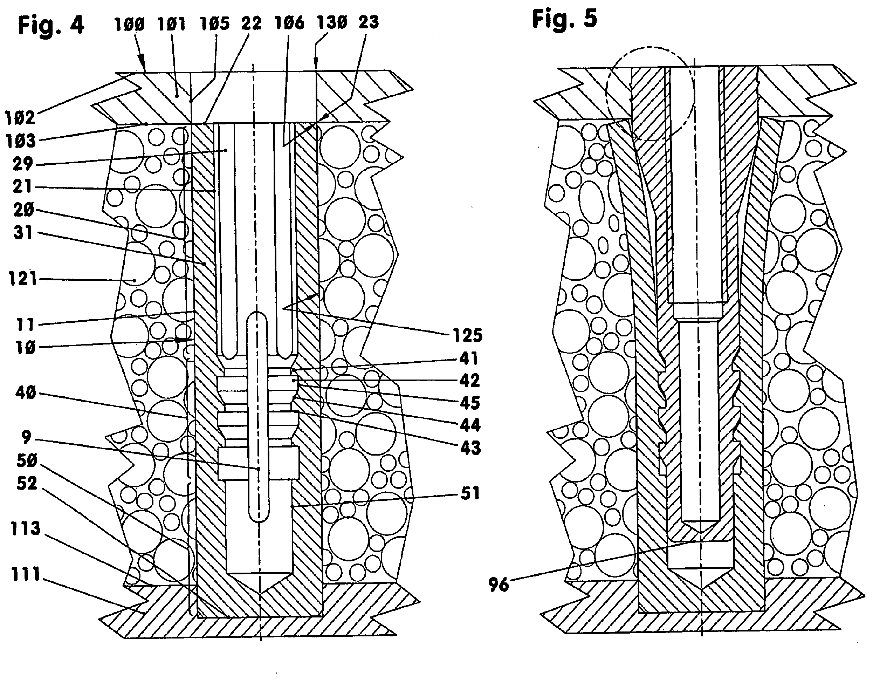

Nach Figur 4 hat der Spreizkörper (10) im Wesentlichen die Form eines Topfes, d.h. er ist ein rohrförmiger Körper mit einem Boden (52). Der Spreizkörper (10) ist in drei Bereiche aufgeteilt: einen Hintergriffsabschnitt (20), eine Verrastungszone (40) und ein Abstützabschnitt (50).

Nach den Figuren 2 und 4 ist der obere, z.B. zylinderrohrförmige Bereich des Spreizkörpers (10) mit z.B. vier geraden Längsschlitzen (29) versehen. Die Schlitze (29) können auch wendelförmig gekrümmt sein. Sie separieren vier Hintergriffselemente (31). Die Länge der Längsschlitze (29) beträgt beispielsweise 40 bis 60% der Spreizkörpergesamtlänge. Ihre Breite beträgt im Ausführungsbeispiel 0,5 Millimeter und ist beim unverformten Dübel z.B. über die gesamte Länge konstant. Die Längsschlitze (29) haben eine 90°-Teilung. Ggf. sind die Längsschlitze (29) spiralförmig gewunden. Zur Kerbentlastung können die Längsschlitze (29) auch in radial angeordneten Entlastungsbohrungen enden.

In Figur 10 ist ein Spreizkörper (10) gezeigt, der nur beispielhaft einen zick-zack-, mäander- oder zinnenförmigen Längsschlitz (29) hat. Bei einem unbeabsichtigten Verdrehen des eingebauten Dübels im Bereich des Stützkerns (121) - durch das Eindrehen einer nicht dargestellten Schraube in den Dübel - kontaktieren sich gegenseitig abstützend ein Teil der Hintergriffsflankenabschnitte (32) der benachbarten Hintergriffselemente (31).

Im Bereich der Hintergriffselemente (31) ist die Innenwandung (21) des Spreizkörpers (10) zylindrisch geformt.

Der Spreizkörper (10) hat am oberen Ende des Hintergriffsabschnitts (31) eine Stirnfläche (22), die hier eben ausgeführt ist. Ggf. kann sie auch die Form eines flachen Kegelstumpfmantels haben, dessen fiktive Spitze auf der Mittellinie (9) des Dübels oberhalb oder unterhalb des oberen Spreizkörperendes liegt. In einem solchen Fall ist als Kegelwinkel z.B. ein Winkel von 156 Winkelgraden vorgesehen.

Da der Spreizkörper (10) eine Länge hat, die gleich oder geringfügig kleiner ist als der kürzeste Abstand zwischen der innenliegenden Oberfläche (103) der Deckplatte (101) und dem Boden (119) der Sacklochbohrung (115), liegt die Stirnfläche (22) im Rahmen der üblichen Toleranzen in der Ebene der innenliegenden Oberfläche (103) der oberen Deckplatte (101). Nach Figur 4 liegt die Außenkante (23) der Stirnfläche (22) gegenüber der innenliegenden Kante (106) der Bohrung (105). Die Stirnfläche (22) ist beispielsweise an ihrer Innen- und Außenkante angefast oder abgerundet, vgl. Figur 2.

Unterhalb der Hintergriffselemente (31) liegt eine Verrastungszone (40). Letztere besteht beispielsweise aus drei Raststollen (41) und drei Rastkerben (42), die jeweils wechselweise hintereinander angeordnet sind. Der einzelne, ringförmige und mehrmals unterbrochene Raststollen (41) hat im Einzelquerschnitt ein Sägezahnprofil. Die Raststollenteilung beträgt ca. ein Viertel des Spreizkörperdurchmessers.

Der einzelne Raststollen (41) hat eine Gleitflanke (44) und eine Rastflanke (43). Die Rastflanke (43), die nach den Figuren 4 bis 7 immer unterhalb der Gleitflanke (44) des gleichen Raststollens (41) liegt, ist Teil einer Ebene, die normal zur Mittellinie (9) orientiert ist. Die Gleitflanke (44) hat die Form eines Kegelstumpfmantels. Der Kegelwinkel des Mantels beträgt z.B. 60 Winkelgrade, wobei die gedachte Spitze, sie liegt auf der Mittellinie (9), immer unterhalb der Rastflanke (43) desselben Raststollens (41) liegt.

Der Nutgrund (45) der Rastkerben (42) hat einen Durchmesser, der dem Durchmesser der zylindrischen Innenwandung (21) des Hintergriffsabschnitts (20) entspricht.

Im Bereich der Verrastungszone (40) befinden sich hier vier Entlastungsschlitze (49), die parallel zur Dübelmittellinie (9) orientiert sind. Sie sind jeweils gegenüber den Längsschlitzen (29) um 45 Winkelgrade versetzt angeordnet. Die an ihren Enden ausgerundeten Entlastungsschlitze (49) können nach oben und nach unten ggf. 0,1 bis 3 Millimeter über die Verrastungszone überstehen. Die Breite der Entlastungsschlitze (49) ist doppelt so groß wie die Breite der Längsschlitze (29). Im Ausführungsbeispiel beträgt sie ein Millimeter.

An die Verrastungszone (40) schließt sich nach unten hin der zylindrische Abstützabschnitt (50) an. Seine Außenkontur, die zumindest bereichsweise eine zentrale Sacklochbohrung (51) umgibt, endet mit dem Boden (52). Die Sacklochbohrung (51) hat einen Durchmesser, der dem minimalen Durchmesser der Raststollen (41) entspricht.

Der Spreizkörper (10) sitzt mit dem Abstützabschnitt (50) in der Sacklochbohrung (115) in Radialrichtung mit geringem oder keinem Spiel. Der Boden (52) des Spreizkörpers (10) kontaktiert den Boden (119) der Sacklochbohrung (115) in der Regel ohne nennenswertes axiales Spiel.

Der Boden (52) des Spreizkörpers (10) kann konkav gewölbt sein oder eine Struktur aufweisen, so dass er nur mittels Linienberührung, punktuell oder partiell die Oberfläche (113) berührt. Die Rauhtiefe der Struktur liegt beispielsweise unter 0,5 Millimetern.

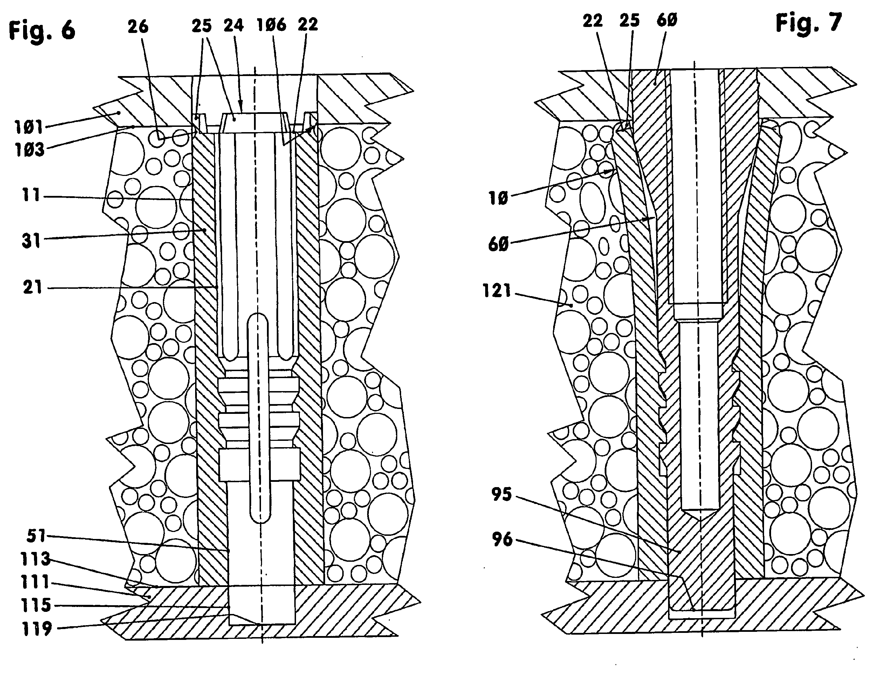

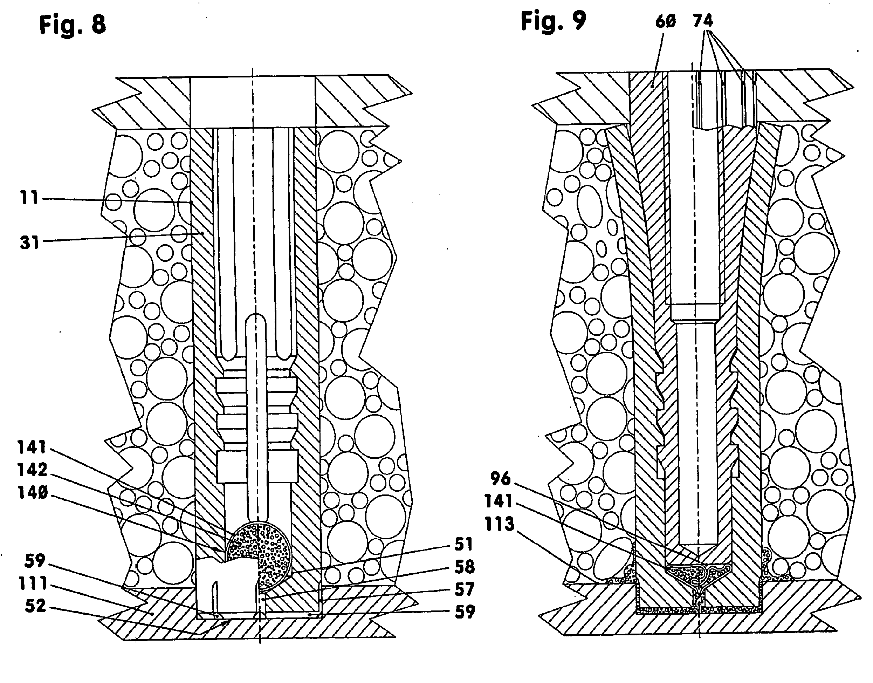

Selbstverständlich kann der Boden (52) auch weggelassen werden, vgl. Figur 6 und 7, sofern eine Detaillösung nach den Figuren 8 und 9 nicht verwendet wird, siehe unten.

In Figur 3 ist ein Keilkörper (60) dargestellt, vgl. auch Figuren 5 und 9. Die gezeigten Keilkörper (60) sind zumindest bereichsweise rotationssymmetrische Bauteile. Sie haben hier vier Abschnitte: einen Sitzabschnitt als Zylinderzone (70), einen Spreizabschnitt als Keilzone (80), ggf. ein Zwischenabschnitt (85), eine Verrastungszone (90) und einen Fußabschnitt (95).

Der Keilkörper (60) hat eine zentrale Bohrung (61) mit beispielsweise einem metrischen Innengewinde (62). Das Gewinde (62) der Bohrung (61) endet in den Ausführungsbeispielen kurz vor der Verrastungszone (90).

Alternativ kann die Bohrung (61) zur Aufnahme von nichtmetrischen Schrauben, z.B. Spanplattenschrauben oder Holzschrauben, einen rechteckigen, ovalen, polygonförmigen oder sternförmigen Querschnitt haben. Ggf. verjüngt sich der Ausnehmungsquerschnitt von Bohrungsbeginn zum Bohrungsende hin.

Der Sitzabschnitt (70) des Keilkörpers (60) hat eine im Wesentlichen zylindrische Außenkontur, vgl. Figur 3. Dieser Abschnitt (70) sitzt bei einem in der Leichtbauplatte (100) montierten Dübel in der Bohrung (105) der oberen Deckplatte (101) ggf. mit einer Presspassung. Nach den Figuren 5 und 7 ragt ein Viertel bis ein Drittel der Länge des Sitzabschnitts (70) zusätzlich in den Bereich des Stützkerns (121) hinein. Der rein zylindrische Bereich des Sitzabschnitts (70), die Zylinderzone, hat hier einen Außendurchmesser, der dem Innendurchmesser der Bohrung (105) entspricht. In Figur 3 hat der Sitzabschnitt (70) zwei umlaufende Widerhakenstege (71). Die geschlossenen, ringförmigen Stege (71) haben einen dreieckigen Einzelquerschnitt, vgl. Figur 5, 7 und 11, mit einer Stützflanke (72) und einer Rutschflanke (73). Sie stehen z.B. 0,15 Millimeter über die dortige zylindrische Außenkontur über. Sie bewirken u.a. ein verdrehsicherndes Verklemmen des Keilkörpers (60) in der Bohrung (105). Zusätzlich dichten sie die Montagefuge zwischen dem Keilkörper (60) und der Leichtbauplatte (100), so dass dort weder Schmutz noch Feuchtigkeit eindringen kann. Auch kann auf diese Weise kein Stützkernmaterial in die Umgebung gelangen.

Alternativ hierzu kann der Sitzabschnitt (70) auch eine Vielzahl von Längsstegen (74) aufweisen, vgl. Figur 9. Hier hat er 15 Längsstege (74). Alle Stege (74) verlaufen parallel zur Mittellinie (9) des Dübels. Auch hier hat jeder Steg (74) einen dreieckigen Querschnitt, wobei seine Flanken z.B. einen 90°-Winkel einschließen. Ggf. nimmt der Querschnitt der Stege (74) von oben nach unten zu. Dies erhöht die Dichtigkeit der Montagefuge.

An dem Sitzabschnitt (70) schließt sich der Spreizabschnitt (80) bzw. die Keilzone an. Letztere besteht aus einem Kegelstumpf, dessen fiktive Spitze in der darunter liegenden Zone (85) oder (90) auf der Mittellinie (9) angeordnet ist. Der Spitzenwinkel liegt zwischen 30 und 45 Winkelgraden. Im Ausführungsbeispiel beträgt er 33,4°. Der minimale Außendurchmesser der Keilzone (80) entspricht dem Innendurchmesser des unverformten Hintergriffsabschnitts (20) des Spreizkörpers (10).

Im Ausführungsbeispiel folgt auf den Spreizabschnitt (80) der zylindrische Zwischenabschnitt (85) und die Verrastungszone (90). Mindestens das der Verrastungszone (90) zugewandte Ende des Zwischenabschnitts (85) hat als Außendurchmesser den Innendurchmesser des unverformten Hintergriffsabschnitts (20). Unabhängig von den Darstellungen der Figuren 1 bis 10 kann die Keilzone (80) und der Zwischenabschnitt (85) zu einem rotationssymmetrischen Spreizabschnitt zusammengefasst werden, wobei sich die Querschnitte dieses neuen Spreizabschnittes kontinuierlich und stetig von der Verrastungszone (90) zur Zylinderzone (70) zumindest bereichsweise nichtlinear vergrößern, vgl. Figur 9. Dort liegen die Hintergriffselemente (31) zumindest bereichsweise am Keilkörper (60) an.

Die Verrastungszone (90) des Keilkörpers (60) hat einen vergleichbaren Aufbau wie die Verrastungszone (40) des Spreizkörpers (10). Von oben nach unten folgt dreimal ein Raststollen (91) einer Rastnut (92), vgl. Figur 3. Die Teilung und die Profilform sind aus der zuvor beschriebenen Verrastungszone (40) bekannt. Auch hier haben die

Raststollen (91) jeweils eine ebene Stützflanke (93). Allerdings liegt sie pro Raststollen (91) oberhalb der dortigen Gleitflanke (94).

Nach den gezeigten Figuren erfolgt die Verrastung ausschließlich in der separaten Verrastungszone (40, 90). Es ist jedoch auch möglich, die Verrastungszone teilweise oder vollständig z.B. in die Keilzone (80) bzw. in den Bereich der Hintergriffselemente (31) zu verlegen.

Der Verrastungszone (90) folgt ein zylindrischer Fußabschnitt (95). Er schließt mit einem Boden (96) ab, vgl. Figur 5. Der Außendurchmesser des Fußabschnittes (95) entspricht dem minimalen Nutgrunddurchmesser der Rastnuten (92).

Der Spreizkörper (10) und der Keilkörper (60) sind z.B. aus einem Polyamid gefertigt.

Um den Dübel montieren zu können, wird die erste Deckplatte (101) und der Stützkörper (121) durchbohrt. Die zweite Deckplatte (111), die im Ausführungsbeispiel vier Millimeter dick ist, wird 2,5 Millimeter tief aufgebohrt. Die Deckplatte (111) wird also nicht durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden, z.B. wenn die Sacklochbohrung (115) der unteren Deckplatte (111) einen kleineren Durchmesser haben soll als die restliche Bohrung (105, 125), vgl. Figuren 6 und 7.

Die Sacklochbohrung (115) kann anstelle einer zylindrischen Innenkontur auch eine kegelstumpfmantelförmige Kontur haben. Die Abstützzone (50) hat dann eine entsprechend angepasste Außenkontur. Ferner kann die Sacklochbohrung (115) statt eines kreisförmigen Querschnittes auch einen rechteckigen, dreieckigen oder polygonalen Querschnitt haben, sofern es das jeweilige Fertigungsverfahren zulässt. Ebenso ist es nicht erforderlich, dass die Abstützzone formgenau in die Sacklochausnehmung (115) hineinpasst. Ggf. hat die Außenkontur der Abstützzone (50) eine z.B. längsgerillte Profilierung, über die sie verdrehsicher und spielfrei in der Ausnehmung (115) festgeklemmt ist.

Die entstandene Ausnehmung, bzw. Bohrung (130) wird beispielsweise mit Pressluft freigeblasen oder leergesaugt.

In die leere Bohrung (130) wird der Spreizkörper (10)nach den Figuren 4 und 8 in voller Länge eingesteckt, so dass er zum einen am Boden (119) der Sacklochbohrung (115) der unteren Deckplatte (111) ansteht und zum anderen mit seiner Stirnfläche (22) auf der Höhe der innenliegenden Oberfläche (103) der oberen Deckplatte (101) abschließt. Der Spreizkörper (10) sitzt z.B. bei Schaumkernen mit geringem Spiel im Bohrungsabschnitt (125).

Beim Einsetzen des Keilkörpers (60) in die Bohrung (21, 51) des Spreizkörpers (10) drückt die Keilzone (80) des Keilkörpers (60) die Hintergriffselemente (31) des Spreizkörpers (10) elastisch auseinander, so dass diese hintergreifend unter die innenliegende Oberfläche (103) der ersten Deckplatte (101) geschoben werden. Die Stirnfläche (22) kann dabei so konstruiert werden, dass sie vollflächig an der Oberfläche (103) zur Anlage kommt. Gleichzeitig wird die Zylinderzone (70) des Keilkörpers (60) in den Bohrungsabschnitt (105) eingepresst. Die Zylinderzone (70) sitzt mit radialer Restspannkraft im Bohrungsabschnitt (105) und schließt zumindest annähernd bündig mit der außenliegenden Oberfläche (102) der ersten Deckplatte (101) ab. Ggf. ist die obere, ebene Stirnfläche (63) des Keilkörpers (60) ein bis drei Zehntel Millimeter unterhalb der außenliegenden Oberfläche (102) der Deckplatte (101) angeordnet.

Am Ende der Spreizbewegung der Hintergriffselemente (31) verrasten die Raststollen (91) des Keilkörpers (60) unlösbar in den Rastkerben (42) des Spreizkörpers (10). Während der drei dabei entstandenen Rastsprünge hat sich der Spreizkörper (10) jeweils kurzzeitig tonnenförmig aufgedehnt. Die Entlastungsschlitze (49) des Spreizkörpers (10) haben sich dazu temporär elastisch aufgeweitet. Nach Abschluss des Rastvorganges nimmt der Spreizkörper (10) im Bereich der Verrastungszone (40) wieder seine zylindrische Kontur (11) an. Ein z.B. zu montierender Beschlag kann nun mit einer Schraube in der Bohrung (61) des Keilkörpers (60) befestigt werden.

Im Holzmöbelbau basiert die Befestigungsstabilität einer Beschlagsbefestigung nicht nur auf dem Auszugswiderstand der in den tragenden Dübeln sitzenden Schrauben, sondern auch im Begrenzen der Setzbeträge und im Vermeiden eines Lösespiels quer zur Mittellinie der jeweiligen Schraube. Der hier vorgestellte Dübel sitzt quer zur Dübelmittellinie (9) zum einen über die Zylinderzone (70) fest in der Bohrung (105) der ersten Deckplatte (101), zum anderen steckt seine Abstützzone (50) in der zweiten Deckplatte (111). Damit ist die Dübelmittellinie (9) formschlüssig normal zur außenliegenden Oberfläche (102) der Deckplatte (101) orientiert. Da zudem der Dübel biegefest konstruiert ist, neigen die Schrauben in den Dübeln nicht zum Schrägstellen, was zu einem beschleunigten Lösen der Verbindung führen könnte. Damit wird die Gefahr des unbeabsichtigten Lockerns oder Lösens des Beschlags minimiert oder sogar verhindert.

In den Ausführungsbeispielen ist der Keilkörper bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. in der Verrastungszone über ein Gewinde verbunden sein, so dass der Keilkörper (60) nicht in einer linearen, nichtrotierenden Rastbewegung, sondern über eine Einschraubbewegung montiert wird.

Bei dem Verwenden eines Gewindes wird in der Montagefuge zwischen dem Spreizkörper (10) und dem Keilkörper (60) ein Rastgesperre oder ein Rastgehemme angeordnet, so dass der Keilkörper (60) nach der Montage nicht mehr oder nur mit großem Aufwand herausgedreht werden kann.

Anstelle der form- und/oder kraftschlüssigen Verbindung von Spreizkörper und Keilkörper durch Verrastungszonen oder Gewinde ist auch eine Bajonettverriegelung denkbar. Die Verbindung durch ein Gewinde oder eine Bajonettverriegelung wird im Verhältnis zu den Verrastungszonen als gleichwertig und gleichwirkend betrachtet.

Die Figuren 6 und 7 sowie 8 und 9 zeigen zwei weitere Detaillösungen. Die erste Detaillösung befasst sich mit einem Dübel, bei dem sich nicht der Stützkörper (10), sondern der Keilkörper (60) in der Sacklochbohrung (115) der unteren Deckplatte (111) abstützt. Die Sacklochbohrung (115) hat hier nur den Durchmesser der Abstützzone (50). Folglich hat der hier röhrförmige Spreizkörper (10) eine Länge, die der Materialstärke des Stützkerns (121) entspricht.

Nach dem Setzen des Spreizkörpers (10) wird der Keilkörper (10) in die Bohrungen (21, 51) eingepresst. Hierbei gelangt die Abstützzone (50) in die Sacklochbohrung (115). Die Abstützzone (50) muss mit dem Boden (52) nicht den Boden (96) der Bohrung (115) kontaktieren.

Bei einem Einbau dieses Dübels in eine Wabenplatte besteht die Gefahr, dass sich der Spreizkörper (10) nach dem Einschieben in den Stützkernbereich seitlich verlagert, bevor der Keilkörper (60) zentrierend in den Spreizkörper (10) eingedrückt wird.

Zum Verhindern eines seitlichen Verrutschens hat die obere Stirnfläche des Spreizkörpers (10) eine andere Gestalt bekommen. Auf der Stirnfläche (22) ist ein zinnenartiger, dünnwandiger Rand (24) aus Randsegmenten (25) angeformt, der die Außenkontur (11) des Spreizkörpers (10) so weit verlängert, dass die Außenkante (23) des Randes (24) nach Figur 6 oberhalb der innenliegenden Oberfläche (103) der Deckplatte (101) liegt. Jedes Hintergriffselement (31) trägt somit mindestens ein Randsegment (25). Die Randsegmente (25) sind seitlich abgeschrägt.

Im Übergangsbereich zwischen den Hintergriffselementen (31) und den Randsegmenten (25) hat die Außenkontur (11) eine umlaufende - durch die Längsschlitze - unterbrochene Einkerbung (26) zur jeweiligen Ausgestaltung eines Filmgelenks. Nach Figur 6 liegt die vertikale Mitte der Einkerbung (26) geringfügig unterhalb der Ebene der innenliegenden Oberfläche (103) der Deckplatte (101).

Wird nun der Keilkörper (60) in den Spreizkörper (10) eingetrieben, werden die Hintergriffselemente (31) nach außen gedrückt, wodurch die Randsegmente (25) - durch die Anlage an der Bohrungskante (106) - an den Filmgelenken abknicken und sich auf die Stirnfläche (22) falten, vgl. Figur 7. Zusammen mit den gefalteten Randsegmenten (25) hat der Spreizkörper (10) nun die erforderliche Länge um zwischen die Deckplatten (101, 111) zu passen.

Bei der Variante nach den Figuren 6 und 7 lässt sich eine zweite - nicht dargestellte - Spreizmöglichkeit verwirklichen. Dazu wird der Fußabschnitt (50) von unten her z.B. mit vier Längsschlitzen versehen. Die Längsschlitze haben z.B. eine 90°-Teilung und liegen ggf. in der gedachten Verlängerung der Schlitze (29). Sie separieren vier zusätzliche Spreizelemente. Letztere klemmen sich bei gesetztem Dübel im unteren Bereich der Stützkernzwischenlage fest. Dies erhöht zusätzlich die Dübelhaltekraft. Dazu geht im Fußabschnitt (50) die zylindrische Bohrung (51) z.B. in eine Bohrung mit kegelstumpfmantelförmiger Innenkontur über. Letztere verjüngt sich nach unten hin. Beim Eindrücken des Keilkörpers (10) spreizt dann dort der Fußabschnitt (95) die Spreizelemente (54) nach außen.

Die zweite Detaillösung ermöglicht ein zusätzliches Fixieren des Dübels an der unteren Deckplatte (111) mittels Verkleben. Dazu ist im Spreizkörper (10) des Dübels eine Klebstoffpatrone bzw. -ballon (140) angeordnet. Im unteren Ende der Sacklochbohrung (51) sitzt der z.B. kugel- oder fassförmige Klebstoffballon (140). Letzterer besteht aus einer dünnwandigen Membrane (141), die einen Klebstoff (142) austrocknungssicher und dauerhaft umschließt. Ggf. ist die Membrane (141) mit zwei Kammern ausgestattet, so dass sie zwei verschiedene Klebstoffkomponenten getrennt aufbewahren kann.

Nach den Figuren 8 und 9 hat der Boden (52) z.B. acht radiale Nuten (59), die in Bodenmitte von einer axiale Bohrung (58) ausgehend sich bis zur Außenwandung (11) des Spreizkörpers (10) erstrecken. Dort treffen sie auf Längsnuten (57), deren Länge kleiner oder gleich der Wandstärke der unteren Deckplatte (111) ist.

Wird nun der Keilkörper (60) in den Spreizkörper (10) eingedrückt, vgl. Figur 9, wird der Klebstoffballon (140) zwischen den Böden (96) und (52) so zusammengepresst, dass er platzt. Zur gezielten Unterstützung des Platzens kann der Klebstoffballon (140) eine Sollbruchstelle aufweisen. Auch ist es möglich, an einem der Böden (52, 96) ein Aufstech- oder Aufreißwerkzeug anzuordnen. Eine Kombination von Sollbruchstelle und Werkzeug ist ebenfalls denkbar.

Der aus dem Klebstoffballon (140) austretende Klebstoff (142) wird unter der Vorwärtsbewegung des als Kolben wirkenden Keilkörpers (60) durch die Bohrung (58) in die Nuten (59) und (57) gepresst. Von dort aus verteilt sich der Klebstoff (142) zwischen dem Boden (52) und der innenliegenden Oberfläche (113) der unteren Deckplatte (111), sowie im Bereich der Wandung der Sacklochbohrung (115). Der überschüssige Klebstoff (142) ummantelt zusätzlich den unteren Bereich der freien Außenkontur (11) des Spreizkörpers (10). Durch das Verkleben des Spreizkörpers (10) bzw. Dübels mit der unteren Deckplatte (111) übernimmt letztere zusätzlich einen Teil der auf den Dübel wirkenden Last.

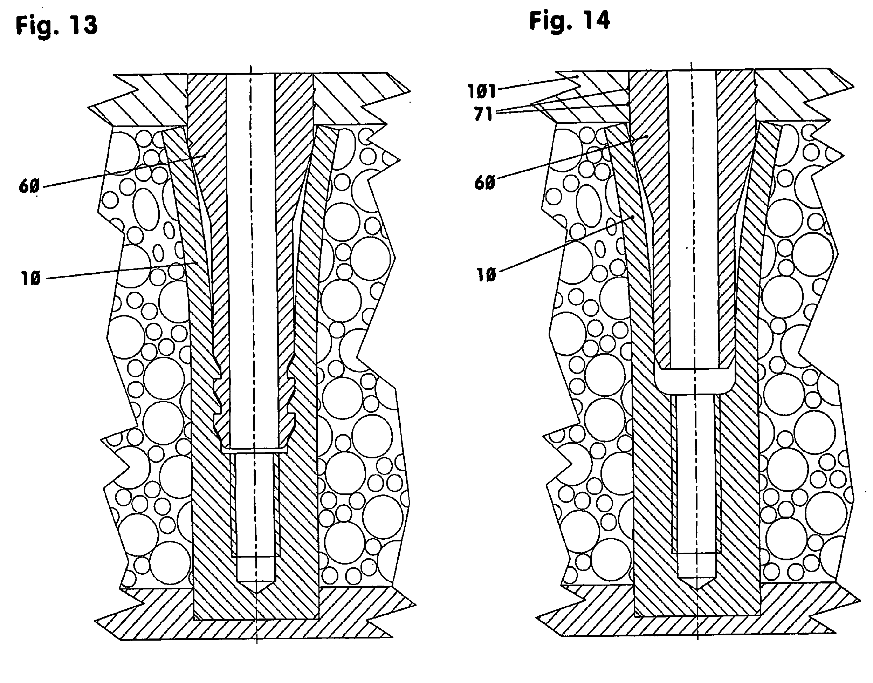

In den Figuren 13 und 14 sind zwei verschiedene Dübel dargestellt, bei denen das Befestigungsmittel nicht im Keilkörper (60), sondern in den Spreizkörper (10) eingeschraubt wird. Nach Figur 13 ist der Keilkörper im Spreizkörper unlösbar verrastet.

Beim Dübel nach Figur 14 wird auf eine Verrastung verzichtet. Der Keilkörper (60) wird u.a. durch die Widerhakenstege (71), vgl. auch Figur 11, in der Deckplatte (101) gehalten.

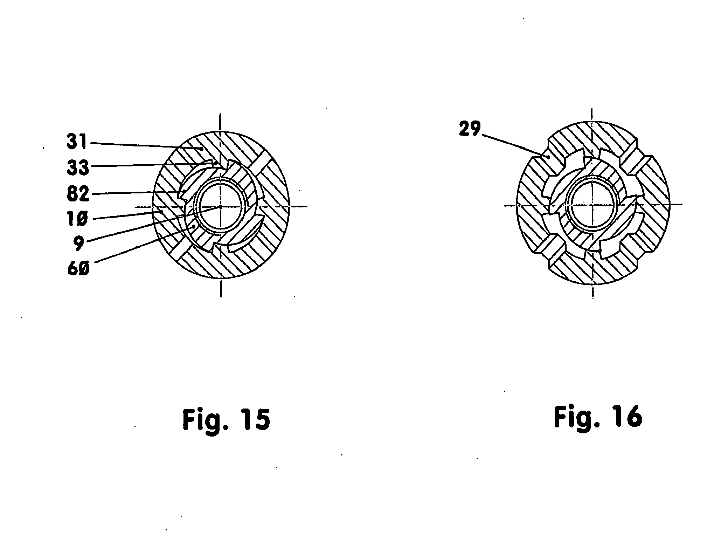

Die Figuren 15 und 16 zeigen einen Querschnitt eines Dübels, bei dem der Keilkörper (60) schon vor dem Dübeleinbau im Spreizkörper (10) angeordnet ist. Der Dübel wird somit vormontiert in die Bohrung (130) eingesetzt, vgl. Figur 4. Die. Keilzonen des Keilkörpers (60) sind hier z.B. vier Exzenterelemente (82), die durch ein Verdrehen - um die Längsachse (9) des Dübels - die Hintergriffselemente (31) und ggf. auch die Spreizelemente (54) des Spreizkörpers (10) ausspreizen. Die Exzenterelemente (82) gleiten hierbei an Nocken (33) entlang, die an die Hintergriffselemente (31) angeformt sind.

Die Verdrehbewegung des Keilkörpers (60) im Spreizkörper (10) kann z.B. durch Rastelemente oder Anschläge begrenzt und/oder arretiert werden. In den Figuren 15 und 16 liegen die Rastelemente und/oder Anschläge in einer anderen - hier nicht sichtbaren - Schnittebene.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen zumindest abschnittsweise langlochförmigen oder ovalen Querschnitt hat.

### Bezugszeichenliste:

- 9: Mittellinie des Dübels

- 10: Spreizkörper
- 11: Außenwandung, zylindrisch, Kontur

- 20: Hintergriffsabschnitt
- 21: Innenwandung, Bohrung
- 22: Stirnfläche
- 23: Außenkante
- 24: Rand
- 25: Randsegmente
- 26: Einkerbung

- 29: Längsschlitze

- 31: Hintergriffselemente
- 32: Hintergriffsflankenabschnitte
- 33: Nocken

- 40: Verrastungszone
- 41: Raststollen
- 42: Rastausnehmungen, Rastkerben
- 43: Rastflanken
- 44: Gleitflanken
- 45: Nutgrund
- 49: Entlastungsschlitze

- 50: Fußabschnitt, Abstützzone
- 51: Sacklochbohrung, Kammer
- 52: Boden
- 57: Längsnuten
- 58: Bohrung, axial; Ausnehmung
- 59: Nuten, radial

- 60: Keilkörper
- 61: Bohrung
- 62: Innengewinde
- 63: Stirnfläche, oben

- 70: Sitzabschnitt, Zylinderzone
- 71: Widerhakenstege, Umlaufstege, Oberflächenstruktur
- 72: Stützflanke
- 73: Rutschflanke
- 74: Längsstege, Oberflächenstruktur

- 80: Spreizabschnitt, Keilzone
- 82: Exzenterelemente
- 85: Zwischenabschnitt

- 90: Verrastungszone
- 91: Raststollen
- 92: Rastausnehmungen, Rastnuten
- 93: Stützflanke, eben
- 94: Gleitflanke

- 95: Fußabschnitt, Abstützzone, kolbenartiges Ende
- 96: Boden

- 100: Sandwichplatte, Leichtkern-Verbundplatte; flächiges Bauteil in Stützkernbauweise
- 101: Deckplatte, oben
- 102: außenliegende Oberfläche
- 103: innenliegende Oberfläche
- 105: Bohrung
- 106: Kante, innenliegend

- 111: Deckplatte, unten
- 113: innenliegende Oberfläche
- 115: Sacklochbohrung, Sacklochausnehmung
- 119: Boden von (115)

- 121: Stützkern, Wabenkern, Schaumstoffkern
- 125: Bohrung

- 130: Gesamtbohrung, Ausnehmung

- 140: Klebstoffpatrone, Klebstoffballon
- 141: Membrane
- 142: Klebstoff

## Patentansprüche

1. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121) in einer Ausnehmung (130), die die erste Deckplatte (101) und die Stützkernzwischenlage (121) durchdringt und die als Sacklochausnehmung (115) in die zweite Deckplatte (111) bereichsweise hineinragt,
- wobei der Dübel mindestens einen Spreizkörper (10) und mindestens einen Keilkörper (60) umfasst,
- wobei der in den Spreizkörper (10) zumindest bereichsweise eingesteckte Keilkörper (60) eine Ausnehmung zum Einschrauben oder Einschlagen eines Befestigungsmittels hat,
- wobei der Dübel in die Ausnehmung (130) setzbar ist,
- wobei der Spreizkörper (10) mindestens zwei spreizbare Hintergriffselemente (31), mindestens eine Verrastungszone (40) und eine Abstützzone (50) hat,
- wobei der Keilkörper (60) mindestens eine Zylinderzone (70), mindestens eine Keilzone (80) und mindestens eine Verrastungszone (90) aufweist,
- wobei die Zylinderzone (70) in der Bohrung (105) der ersten Deckplatte (101) anlegbar ist,
- wobei die Hintergriffselemente (31) des Spreizkörpers (10) durch die Keilzone (80) hinter der ersten Deckplatte (101) - an dieser anliegend - aufspreizbar sind,
- wobei die Verrastungszonen (40, 90) miteinander verrastet sind und
- wobei die Abstützzone (50) des Spreizkörpers (10) in der Sacklochausnehmung (115) der zweiten Deckplatte (111) zumindest radial anlegbar ist.

2. Dübel gemäß Anspruch 1, **dadurch gekennzeichnet, dass** die in die Sacklochausnehmung (115) der Deckplatte (111) hineinragende Abstützzone (50) des Spreizkörpers (10) eine Länge hat, die 50 bis 80% der Wandstärke der Deckplatte (111) entspricht.

3. Dübel gemäß Anspruch 1, **dadurch gekennzeichnet, dass** der Spreizkörper (10) rohrförmig gestaltet ist.

4. Dübel gemäß Anspruch 1, **dadurch gekennzeichnet, dass** der Spreizkörper (10) zur Ausbildung der Hintergriffselemente (31) zumindest bereichsweise längsgeschlitzt ist.

5. Dübel gemäß Anspruch 1, **dadurch gekennzeichnet, dass** die Keilzone (80) des Keilkörpers(60) kreisförmige, quadratische, polygonale oder sternförmige Querschnitte hat.

6. Dübel gemäß Anspruch 1, **dadurch gekennzeichnet, dass** bei gesetztem Dübel eine Zylinderzone (70) des Keilkörpers (60) in der Bohrung (105) der ersten Deckplatte (101) zumindest bereichsweise ohne Spiel anliegt.

7. Dübel gemäß Anspruch 1, **dadurch gekennzeichnet, dass** bei gesetztem Dübel die in der Bohrung (105) sitzende Zylinderzone (70) des Keilkörpers (60) zur Verdrehsicherung des Dübels eine Oberflächenstruktur (71, 74) aufweist.

8. Dübel gemäß Anspruch 1, **dadurch gekennzeichnet, dass** die Verrastungszonen (40, 90) des Spreizkörpers (10) und des Keilkörpers (60) jeweils ein Sägezahnprofil aufweisen.

9. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121), in einer Ausnehmung (130), die die erste Deckplatte (101) und die Stützkernzwischenlage (121) durchdringt und die als Sacklochausnehmung (115) in die zweite Deckplatte (111) bereichsweise hineinragt,
- wobei der Dübel mindestens einen Spreizkörper (10) und mindestens einen Keilkörper (60) umfasst,
- wobei der in den Spreizkörper (10) zumindest bereichsweise eingesteckte Keilkörper (60) eine Ausnehmung zum Einschrauben oder Einschlagen eines Befestigungsmittels hat,
- wobei der Dübel in die Ausnehmung (130) setzbar ist,
- wobei der Spreizkörper (10) mindestens zwei spreizbare Hintergriffselemente (31) und mindestens eine Verrastungszone (40) hat,
- wobei der Keilkörper (60) mindestens eine Zylinderzone (70), mindestens eine Keilzone (80), mindestens eine Verrastungszone (90) und eine Abstützzone (95) aufweist
- wobei die Zylinderzone (70) in der Bohrung (105) der ersten Deckplatte (101) anlegbar ist,
- wobei die Hintergriffselemente (31) des Spreizkörper (10) durch die Keilzone (80) hinter der ersten Deckplatte (101) - an dieser anliegend- aufspreizbar ist,
- wobei die Verrastungszonen (40, 90) miteinander verrastet sind und
- wobei die Abstützzone (95) des Keilkörpers (60) in der Sacklochausnehmung (115) der zweiten Deckplatte (111) zumindest radial anlegbar ist.

10. Dübel zur Befestigung an - in Stützkernbauweise gefertigten - flächigen Bauteilen (100) mit einer ersten (101) und einer zweiten Deckplatte (111) und mindestens einer Stützkernzwischenlage (121) in einer Ausnehmung (130), die die erste Deckplatte (101) und die Stützkernzwischenlage (121) durchdringt und die als Sacklochausnehmung (115) in die zweite Deckplatte (111) bereichsweise hineinragt,
- wobei der Dübel mindestens einen Spreizkörper (10) und mindestens einen Keilkörper (60) umfasst,
- wobei der in den Spreizkörper (10) zumindest bereichsweise eingesteckte Keilkörper (60) eine Ausnehmung zum Einschrauben oder Einschlagen eines Befestigungsmittels hat,
- wobei der Dübel in die Ausnehmung (130) setzbar ist,
- wobei der Spreizkörper (10) mindestens zwei spreizbare Hintergriffselemente (31), mindestens eine Verrastungszone (40, eine Abstützzone (50) und eine Kammer (51) mit eingelegter - mindestens einen Klebstoff (142) enthaltenden - Klebstoffpatrone (140) und bodenseitiger Austrittsausnehmung (58) hat,
- wobei der Keilkörper (60) mindestens eine Zylinderzone (70), mindestens eine Keilzone (80), mindestens eine Verrastungszone (90) und ein kolbenartiges Ende (95) aufweist,
- wobei die Zylinderzone (70) in der Bohrung (105) der ersten Deckplatte (101) anlegbar ist,
- wobei die Hintergriffselemente (31) des Spreizkörpers (10) durch die Keilzone (80) hinter der ersten Deckplatte (101) - an dieser anliegend - aufspreizbar sind,
- wobei die Verrastungszonen (40, 90) miteinander verrastet sind,
- wobei die Abstützzone (50) des Spreizkörpers (10) in der Sacklochausnehmung (115) der zweiten Deckplatte (111) zumindest radial anlegbar ist und
- wobei der Klebstoff (142) der geöffneten Klebstoffpatrone (140) in der Montagefuge zwischen der unteren Deckplatte (111) und dem bodenseitigen Ende (52) des Spreizkörpers (10) verteiltbar ist.

11. Dübel gemäß Anspruch 10, **dadurch gekennzeichnet, dass** das bodenseitige Ende (52) des Spreizkörpers (10) Nuten (59) zur Verteilung des Klebstoffes (142) aufweist.

12. Dübel zur Befestigung an - in Stützkernbauweise gefertigten - flächigen Bauteilen (100) mit einer ersten (101) und einer zweiten Deckplatte (111) und mindestens einer Stützkernzwischenlage (121) in einer Ausnehmung (130), die die erste Deckplatte (101) und die Stützkernzwischenlage (121) durchdringt und die als Sacklochausnehmung (115) in die zweite Deckplatte (111) bereichsweise hineinragt,
- wobei der Dübel mindestens einen Spreizkörper (10) und mindestens einen Keilkörper (60) umfasst,
- wobei der Spreizkörper (10) eine Ausnehmung zum Einschrauben oder Einschlagen eines Befestigungsmittels hat,
- wobei der Dübel in die Ausnehmung (130) setzbar ist,
- wobei der Spreizkörper (10) mindestens zwei spreizbare Hintergriffselemente (31) und eine Abstützzone (50) hat,
- wobei der Keilkörper (60) mindestens eine Zylinderzone (70) und mindestens eine Keilzone (80) aufweist,
- wobei die Zylinderzone (70) in der Bohrung (105) der ersten Deckplatte (101) anlegbar ist,
- wobei die Hintergriffselemente (31) des Spreizkörpers (10) durch die Keilzone (80) hinter der ersten Deckplatte (101)-an dieser anliegend - aufspreizbar sind und
- wobei die Abstützzone (50) des Spreizkörpers (10) in der Sacklochausnehmung (115) der zweiten Deckplatte (111) zumindest radial anlegbar ist.

## Claims

1. Anchor for mounting in planar building components (100) made in a supporting-core-type of construction comprising first and second cover sheets (101 and 111, respectively) and at least one supporting core layer (121) therebetween, said anchor to be inserted in a recess (130) extending through the first cover sheet (101) and through the supporting core layer (121) in the form of a blind hole (115) in parts of second cover sheet (111), with
- the anchor comprising at least one spreader body (10) and at least one wedge body (60),
- the wedge body (60) inserted at least partly into the spreader body (10) having therein an opening for receiving a fastener screwed or struck thereinto,
- the anchor being adapted to be inserted in recess (130),
- the spreader body (10) having at least two spreadable grip-behind elements (31), at least one locking zone (40) and a support zone (50),
- the wedge body (60) having at least one cylindrical zone (70), at least one wedge zone (80) and at least one locking zone (90),
- the cylindrical zone (70) being adapted to engage bore (105) in first cover sheet (101),
- the grip-behind elements (31) of spreader body (10) being adapted to be spread by wedge zone (80) behind the first cover sheet (101) to engage the latter,
- the locking zones (40, 90) being adapted to interlockingly engage each other, and
- the support zone (50) of spreader body (10) being adapted to at least radially engage the blind recess (115) in second cover sheet (111).

2. Anchor as claimed in claim 1, **characterized in that** the spreader body (10) support zone (50) extending into blind hole (115) of cover sheet (111) has a length corresponding to 50 to 80 % of the thickness of cover sheet (111).

3. Anchor as claimed in claim 1, **characterized in that** the spreader body (10) is configured to be tubular.

4. Anchor as claimed in claim 1, **characterized in that** the spreader body (10) is at least partly slotted to form grip-behind elements (31).

5. Anchor as claimed in claim 1, **characterized in that** the wedge zone (80) of wedge body (60) is circular, square, polygonal or star-shaped in cross-section.

6. Anchor as claimed in claim 1, **characterized in that**, with the anchor installed, a cylindrical zone (70) of the wedge body (60) engages bore (105) in the first cover sheet (101) at least partly without clearance.

7. Anchor as claimed in claim 1, **characterized in that** the anchor, when installed, is secured against rotation by the cylindrical zone (70) of wedge body (60) seated in bore (105) having a structured surface (71, 74).

8. Anchor as claimed in claim 1, **characterized in that** locking zones (40, 90) of the spreader and wedge bodies (10, 60, respectively) both have a sawtooth profile.

9. Anchor for mounting in planar components (100) made in a supporting-core-type construction, said components having first and second cover sheets (101, 111, respectively) and at least one supporting core layer (121) therebetween, said anchor to be inserted in a recess (130) extending through the first cover sheet (101) and the supporting core layer (121) in the form of a blind hole (115) into parts of second cover sheet (111), with
- the anchor comprising at least one spreader body (10) and at least one wedge body (60),
- the wedge body (60) inserted at least into parts of the spreader body (10) having therein an opening for receiving a fastener screwed or struck thereinto,
- the anchor adapted to be inserted in recess (130),
- the spreader body (10) having at least two spreadable grip-behind elements (31) and at least one locking zone (40)
- the wedge body (60) having at least one cylindrical zone (70), at least one wedge zone (80), at least one locking zone (90) and a support zone (95),
- the cylindrical zone (70) adapted to engage bore (105) in first cover sheet (101),
- the grip-behind elements (31) of spreader body (10) adapted to be spread by wedge zone (80) behind the first cover sheet (101) to engage the latter,
- the locking zones (40, 90) being adapted to interlockingly engage each other, and
- support zone (95) of wedge body (60) adapted to at least radially engage the blind recess (115) in second cover sheet (111).

10. Anchor for mounting in planar components (100) made in a supporting-core-type construction, said components having first and second cover sheets (101, 111, respectively) and at least one intermediate supporting core layer (121) therebetween, said anchor to be inserted in a recess (130) extending through the first cover sheet (101) and the supporting core layer (121) in the form of a blind hole (115) into parts of second cover sheet (111), with
- the anchor comprising at least one spreader body (10) and at least one wedge body (60),
- the wedge body (60) inserted at least into parts of the spreader body (10) having therein an opening for receiving a fastener screwed or struck thereinto,
- the anchor adapted to be inserted in recess (130),
- the spreader body (10) having at least two spreadable grip-behind elements (31), at least one locking zone (40), a support zone (50) and a chamber (51), said chamber having placed therein an adhesive cartridge (140) containing at least one adhesive (142) and the chamber having a bottom-side discharge opening (58) theretrough,
- the wedge body (60) having at least one cylindrical zone (70), at least one wedge zone (80), at least one locking zone (90) and a piston-like end (95),
- the cylindrical zone (70) adapted to engage bore (105) in first cover sheet (101),
- the grip-behind elements (31) of spreader body (10) adapted to be spread by wedge zone (80) behind the first cover sheet (101) to engage the latter,
- the locking zones (40, 90) being adapted to interlockingly engage each other,
- support zone (50) of spreader body (10) adapted to at least radially engage the blind recess (115) in second cover sheet (111), and
- the adhesive (142) distributable from the adhesive cartridge (140), when opened, into the mounting joint between lower cover sheet (111) and the bottom-side end (52) of spreader body (10).

11. Anchor as claimed in claim 10, **characterized in that** the bottom-side end (52) of spreader body (10) has grooves (59) thereon for distributing the adhesive (142).

12. Anchor for mounting in planar building components (100) made in a supporting-core-type of construction comprising first and second cover sheets (101 and 111, respectively) and at least one supporting core layer (121) therebetween, said anchor to be inserted in a recess (130) extending through the first cover sheet (101) and the supporting core layer (121) in the form of a blind hole (115) in parts of second cover sheet (111), with
- the anchor comprising at least one spreader body (10) and at least one wedge body (60),
- the spreader body (10) having therein an opening for receiving a fastener screwed or struck thereinto,
- the anchor adapted to be inserted in recess (130),
- the spreader body (10) having at least two spreadable grip-behind elements (31) and a support zone (50),
- the wedge body (60) having at least one cylindrical zone (70) and at least one wedge zone (80),
- the cylindrical zone (70) adapted to engage bore (105) in first cover sheet (101),
- the grip-behind elements (31) of spreader body (10) adapted to be spread by wedge zone (80) behind the first cover sheet (101) to engage the latter, and
- the support zone (50) of spreader body (10) adapted to at least radially engage the blind recess (115) in second cover sheet (111).

## Revendications

1. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121), dans une cavité (130) qui traverse la première plaque de recouvrement (101) et la couche intermédiaire (121) et qui entre, en partie, comme un trou borgne (115) dans la deuxième plaque de recouvrement,
- la cheville comprenant au moins un corps d'expansion (10) et au moins un corps cunéiforme (60),
- le corps cunéiforme (60), inséré au moins partiellement dans le corps d'expansion (10), présentant une cavité pour visser ou enfoncer un moyen de fixation,
- la cheville pouvant être posée dans la cavité (130),
- le corps d'expansion (10) ayant au moins deux éléments de prise arrière écartables (31), au moins une zone d'encliquetage (40) et une zone d'appui (50),
- le corps cunéiforme (60) présentant au moins une zone cylindrique (70), au moins une zone cunéiforme (80) et au moins une zone d'encliquetage (90),
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- les zones d'encliquetage (40, 90) étant encliquetées entre elles et
- la zone d'appui (50) du corps d'expansion (10) pouvant s'appliquer au moins radialement dans le trou borgne (115) de la deuxième plaque de recouvrement (111).

2. Cheville selon la revendication 1, **caractérisée en ce que** la zone d'appui (50) du corps d'expansion (10) qui pénètre dans le trou borgne (115) de la plaque de recouvrement (111) a une longueur correspondant à une valeur allant de 50 à 80% de l'épaisseur de la plaque de recouvrement (111).

3. Cheville selon la revendication 1, **caractérisée en ce que** le corps d'expansion (10) a la forme d'un tube.

4. Cheville selon la revendication 1, caractériséeen ce que le corps d'expansion (10) présente des fentes longitudinales, au moins dans une partie, pour la formation des éléments de prise arrière (31).

5. Cheville selon la revendication 1, **caractérisée en ce que** la zone cunéiforme (80) du corps cunéiforme (60) a des sections transversales circulaires, quadratiques, polygonales ou en forme d'étoile.

6. Cheville selon la revendication 1, **caractérisée en ce que**, la cheville étant alors posée, une zone cylindrique (70) du corps cunéiforme (60) s'applique au moins partiellement sans jeu dans la forure (105) de la première plaque de recouvrement (101).

7. Cheville selon la revendication 1, **caractérisée en ce que**, la cheville étant alors posée, la zone cylindrique (70) du corps cunéiforme (60) qui se trouve dans la forure (105) présente une structure de surface (71, 74) assurant une sécurité anti-rotation de la cheville.

8. Cheville selon la revendications 1, **caractérisée en ce que** les zones d'encliquetage (40, 90) du corps d'expansion (10) et du corps cunéiforme (60) présentent chacune un profil en dent de scie.

9. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121), dans une cavité (130) qui traverse la première plaque de recouvrement (101) et la couche intermédiaire (121) et qui entre, en partie, comme un trou borgne (115) dans la deuxième plaque de recouvrement,
- la cheville comprenant au moins un corps d'expansion (10) et au moins un corps cunéiforme (60),
- le corps cunéiforme (60) inséré au moins partiellement dans le corps d'expansion (10) présentant une cavité pour visser ou enfoncer un moyen de fixation,
- la cheville pouvant être posée dans la cavité (130),
- le corps d'expansion (10) ayant au moins deux éléments de prise arrière écartables (31) et au moins une zone d'encliquetage (40),
- le corps cunéiforme (60) présentant au moins une zone cylindrique (70), au moins une zone cunéiforme (80), au moins une zone d'encliquetage (90) et une zone d'appui (95),
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- les zones d'encliquetage (40, 90) étant encliquetées entre elles et
- la zone d'appui (95) du corps cunéiforme (60) pouvant s'appliquer au moins radialement dans le trou borgne (115) de la deuxième plaque de recouvrement (111).

10. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121), dans une cavité (130) qui traverse la première plaque de recouvrement (101) et la couche intermédiaire (121) et qui entre, en partie, comme un trou borgne (115) dans la deuxième plaque de recouvrement (111),
- la cheville comprenant au moins un corps d'expansion (10) et au moins un corps cunéiforme (60),
- le corps cunéiforme (60) inséré au moins partiellement dans le corps d'expansion (10) présentant une cavité pour visser ou enfoncer un moyen de fixation,
- la cheville pouvant être posée dans la cavité (130),
- le corps d'expansion (10) ayant au moins deux éléments de prise arrière écartables (31), au moins une zone d'encliquetage (40), une zone d'appui (50) et une chambre (51) avec une cartouche d'adhésif (140) insérée qui contient au moins une substance adhésive (142) et qui a un orifice de sortie (58) côté fond,
- le corps cunéiforme (60) présentant au moins une zone cylindrique (70), au moins une zone cunéiforme (80), au moins une zone d'encliquetage (90) et une extrémité (95) similaire à un piston,
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- les zones d'encliquetage (40, 90) étant encliquetées entre elles,
- la zone d'appui (50) du corps d'expansion (10) pouvant s'appliquer au moins radialement dans le trou borgne (115) de la deuxième plaque de recouvrement (111) et
- la substance adhésive (142) de la cartouche d'adhésif ouverte (140) pouvant être répartie dans le joint de montage entre la plaque de recouvrement inférieure (111) et l'extrémité côté fond (52) du corps d'expansion (10).

11. Cheville selon la revendication 10, **caractérisée en ce que** l'extrémité côté fond (52) du corps d'expansion (10) présente des rainures (59) permettant la répartition de la substance adhésive (142).

12. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121), dans une cavité (130) qui traverse la première plaque de recouvrement (101) et la couche intermédiaire (121) et qui entre, en partie, comme un trou borgne (115) dans la deuxième plaque de recouvrement,
- la cheville comprenant au moins un corps d'expansion (10) et au moins un corps cunéiforme (60),
- le corps d'expansion (10) présentant une cavité pour visser ou enfoncer un moyen de fixation,
- la cheville pouvant être posée dans la cavité (130),
- le corps d'expansion (10) ayant au moins deux éléments de prise arrière écartables (31) et une zone d'appui (50),
- le corps cunéiforme (60) présentant au moins une zone cylindrique (70) et au moins une zone cunéiforme (80),
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- la zone d'appui (50) du corps d'expansion (10) pouvant s'appliquer au moins radialement dans le trou borgne (115) de la deuxième plaque de recouvrement (111).
